(19) Europäisches Patentamt
European Patent Office
Office européen des brevets

(11) Veröffentlichungsnummer: **0 275 008**
**B1**

(12) # EUROPÄISCHE PATENTSCHRIFT

(45) Veröffentlichungstag der Patentschrift: **07.11.90**

(51) Int. Cl.[5]: **C23D 5/04,** C03C 8/14

(21) Anmeldenummer: **88100028.5**

(22) Anmeldetag: **05.01.88**

(54) **Mit Organopolysiloxanen beschichtete Emailpulver für den elektrostatischen Pulverauftrag und Verfahren zu ihrer Herstellung.**

(30) Priorität: **13.01.87 DE 3700702**

(43) Veröffentlichungstag der Anmeldung:
**20.07.88 Patentblatt 88/29**

(45) Bekanntmachung des Hinweises auf die Patenterteilung:
**07.11.90 Patentblatt 90/45**

(84) Benannte Vertragsstaaten:
**AT BE DE ES FR GB IT NL SE**

(56) Entgegenhaltungen:
**EP-A- 0 001 234**
**EP-A- 0 179 379**
**FR-A- 2 270 220**
**FR-A- 2 439 046**

(73) Patentinhaber: **BAYER AG,**
**D-5090 Leverkusen 1 Bayerwerk(DE)**

(72) Erfinder: **Schittenhelm, Hans-Joachim, Dr.,**
**Walter-Flex-Strasse 6, D-5090 Leverkusen(DE)**
Erfinder: **Joseph, Werner, Dr.,**
**Ludwig-Aschoff-Strasse 20, D-5000 Köln 80(DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft mit Organopolysiloxanen beschichtete Emailpulver für den elektrostatischen Pulverauftrag und ein Verfahren zur Herstellung dieser Pulver durch Mahlung von Emailfritten unter Zugabe von Organopolysiloxanen. Ferner betrifft die Erfindung die Verwendung dieser Emailpulver für den elektrostatischen Pulverauftrag und metallische Oberflächen.

Nach der DE-B-2 519 890 werden zum elektrostatischen Pulverauftrag geeignete Emailpulver erhalten, indem Emailfritten mit -Si-H-gruppenhaltigen Organopolysiloxanen während einer Mahlung beschichtet werden. Solche Emailpulver weisen einen hohen elektrischen Oberflächenwiderstand, eine gute Fluidität und gute Lagerstabilität auf. Bei einseitiger Beschichtung von Stahlsubstraten mit diesen Emailpulvern durch elektrostatischen Pulverauftrag und nachfolgendes Einbrennen, werden in der Regel Emaillierungen mit glatter Oberfläche erhalten.

Derartige Emailpulver, insbesondere solche die getrübte Emaillierungen ergeben, haben aber den Nachteil, daß bei beidseitigen Beschichtungen von Stahlsubstraten schaumige Oberflächen auftreten. Dieser Fehler tritt insbesondere bei direkt weißemaillierten Stahlsubstraten zumeist an den Kanten auf.

Die Aufgabe der Erfindung bestand nun darin, Emailpulver für den elektrostatischen Pulverauftrag zur Verfügung zu stellen, die zum ein- und beidseitigen Beschichten von metallischen Oberflächen geeignet sind. Diese Aufgabe wird durch die Erfindung gelöst.

Gegenstand der Erfindung sind mit Organopolysiloxanen beschichtete Emailpulver für den elektrostatischen Pulverauftrag, welche dadurch gekennzeichnet sind, daß die Einzelteilchen der Emailpulver eine innere Schicht eines Si-H-gruppenhaltigen Organopolysiloxans (A) und eine äußere Schicht eines Organopolysiloxans ohne funktionelle Gruppen (B) aufweisen und der Anteil des Organopolysiloxans (A) und der Anteil des Organopolysiloxans (B) jeweils 0,1 bis 0,3 Gew.-%, bezogen auf die Emailpulvermenge, betragen.

Bevorzugt sind solche Emailpulver, in denen der Anteil des Organopolysiloxans (A) 0,15 bis 0,25 Gew.-% und der Anteil des Organopolysiloxans (B) 0,1 bis 0,2 Gew.-% beträgt.

Besonders bevorzugt sind Emailpulver, die eine innere Schicht aus einen -Si-H-gruppenhaltigen Methylpolysiloxan und eine äußere Schicht aus einem Methylpolysiloxan ohne funktionelle Gruppen aufweisen.

Erfindungsgemäße Emailpulver, die ein Sieb von 40 µm Maschenweite passieren, wobei der Rückstand des Emailpulvers auf dem Sieb kleiner als 20 % ist, werden ebenfalls besonders bevorzugt.

Die -Si-H-gruppenhaltigen Organopolysiloxane (A) und die Organopolysiloxane ohne funktionelle Gruppen (B) können erfindungsgemäß verschiedenste Zusammensetzungen aufweisen. Beispielsweise bestehen die Organopolysiloxane (A) aus Organopolysiloxanen folgender allgemeiner Struktur:

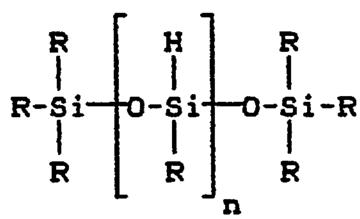

Die Reste R können für gesättigte und/oder ungesättigte Alkyl- oder Cycloalkylgruppen mit 1 bis 6 Kohlenstoffatomen aber auch für Alkoxy-, Aryl- und Arylalkylgruppen stehen, wobei die Reste R gleich oder verschieden sein können und n für eine ganze Zahl von 10 bis 110 steht, -Si-H-gruppenhaltige Organopolysiloxane mit Methylgruppen sind dabei bevorzugt.

Die Organopolysiloxane (B) können beispielsweise die folgende allgemeine Struktur aufweisen, wobei die Reste R und die Zahl n die obengenannte Bedeutung haben:

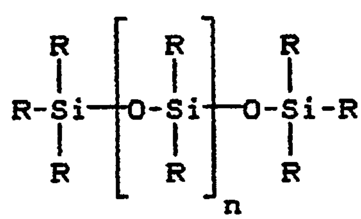

Gegenstand der Erfindung ist auch ein Verfahren zur Herstellung der erfindungsgemäßen Emailpulver durch Mahlung von Emailfritten unter Zugabe von Organopolysiloxanen, welches dadurch gekennzeichnet ist, daß zu Beginn der Mahlung ein-Si-H-gruppenhaltiges Organopolysiloxan (A) und gegen Ende der Mahlung ein Organopolysiloxan ohne funktionelle Gruppen (B) zugeben wird und das Organopolysiloxan (A) und das Organopolysiloxan (B) jeweils in einer Menge von 0,1 bis 0,3 Gew.-%, bezogen auf die Emailpulvermenge, zugegeben werden.

Bevorzugt ist dabei ein Verfahren bei dem das Organopolysiloxan (A) in einer Menge von 0,15 bis 0,25 Gew.-% und das Organopolysiloxan (B) in einer Menge von 0,1 bis 0,2 Gew.-% zugegeben wird.

Eine sehr vorteilhafte Variante des erfindungsgemäßen Verfahrens besteht darin, zu Beginn der Mahlung ein -Si-H-gruppenhaltiges Methylpolysiloxan und gegen Ende der Mahlung ein Methylpolysiloxan ohne funktionelle Gruppen zuzugeben. Die Zugabe des Organopolysiloxans (B) kann zu einem beliebigen Zeitpunkt gegen Ende der Mahlung erfolgen. Die Dauer der Mahlung wird von dem gewünschten Mahlgrad der Emailfritte, also dem gewünschten mittleren Teilchendurchmesser des Mahlguts, und von den Mahlbedingungen bestimmt. Vorzugsweise erfolgt die Zugabe des Organopolysiloxans (B) wenn etwa 50 % des Mahlgutes eine mittlere Teilchengröße von weniger als 100 µm aufweist.

Die Mahlung wird dann vorzugsweise solange weiter fortgesetzt, bis die erfindungsgemäß beschichteten Emailpulver ein Sieb von 40 µm Maschenweite passieren und der Rückstand des Emailpulvers auf dem Sieb kleiner als 20 % ist.

Durch die zeitlich getrennte Zugabe der verschiedenen Organopolysiloxane in der genannten Abfolge und in den angegebenen Einsatzmengen werden Emailpulver mit der erfindungsgemäßen Beschichtung erhalten.

Die jeweils optimale Menge des Organopolysiloxans (A) ist abhängig von der Emailfrittenzusammensetzung. Sie läßt sich durch einen Vorversuch bestimmen. Dabei geht man wie folgt vor:

Emailfritten werden mit steigenden Mengen des Organopolysiloxans (A) versetzt und vermahlen. Nach jeder Zugabe des Organopolysiloxans (A) wird der Oberflächenwiderstand des Pulvers bestimmt.

Die optimale Menge Y ist gemäß Abb. 1 dann gegeben, wenn der zunächst ansteigende Oberflächenwiderstand trotz weiterer Organopolysiloxanzugabe nicht mehr zunimmt und einen Grenzwert X erreicht.

Bei Erreichen dieses Grenzwertes weisen die Emailpulver eine die Einzelteilchen umhüllende, optimale Beschichtung mit Organopolysiloxan (A) auf. Auf diese Schicht wird dann erfindungsgemäß die äußere Schicht aus Organopolysiloxan (B) aufgebracht, wobei die optimale Menge dabei zwischen 0,1 bis 0,3 Gew.-%, bezogen auf das Emailfrittengewicht, liegt. Die erfindungsgemäßen Emailpulver weisen einen hohen Oberflächenwiderstand von größer oder gleich $10^{14}$ Ω and eine sehr gute Lagerstabilität und Fluidität auf und sind damit hervorragend für den elektrostatischen Pulverauftrag geeignet.

Diese Emailpulver ergeben sowohl bei einseitiger als auch bei zweiseitiger Beschichtung von Metallsubstraten durch elektrostatischen Pulverauftrag und nachfolgendes Einbrennen fehlerfreie Emaillierungen mit glatter Oberfläche.

Emailpulver, die gemäß dem Stand der Technik nur mit einem Organopolysiloxan beschichtet sind, oder solche, die Beschichtungen in einer anderen Reihenfolge als der erfindungsgemäßen aufweisen, liefern bei zweiseitigem Beschichten von Metallsubstraten schaumige Oberflächen und/oder sind aufgrund zu niedriger Oberflächenwiderstände, mangelhafter Lagerstabilität oder mangelhafter Fluidität nicht für den elektrostatischen Pulverauftrag geeignet.

Ein weiterer Gegenstand der Erfindung ist somit auch die Verwendung der erfindungsgemäßen Emailpulver für den elektrostatischen Pulverauftrag auf metallische Substrate.

Das Hauptanwendungsgebiet der erfindungsgemäßen Emailpulver liegt in der Direktweißemaillierung von Stahlsubstraten. Für Direktweißemaillierungen werden Emailpulver eingesetzt, die nach dem Einbrennen getrübte Emaillierungen liefern. Als Beispiele seien Bortitanemails, Zirkonphosphatemails und Zinktitanemails genannt. Die erfindungsgemäßen Emailpulver können aber auch für andere Emaillierungen von Stahlsubstraten und auch anderen Metallsubstraten eingesetzt werden. Die zur Herstellung der Emailpulver eingesetzten Emailfritten können dabei unterschiedlichster Zusammensetzung sein.

Anhand der Beispiele soll die Erfindung näher erläutert werden. Die Versuchsbedingungen und die Resultate der einzelnen Versuche sind in Tabelle 1 zusammengestellt.

Die Herstellung der Emailpulver erfolgte nach folgender Arbeitsvorschrift:

Ein für die Direktweißemaillierung geeignetes Titanweißemail folgender Hauptzusammensetzung:

| | Gew.-% |
|---|---|
| $SiO_2$ | 42 - 44 |
| $B_2O_3$ | 16 - 18 |
| $TiO_2$ | 16 - 19 |
| $Na_2O$ | 9 - 12 |
| $K_2O$ | 4 - 7 |
| $Li_2O$ | 0,5 - 1,5 |
| $P_2O_5$ | 0,5 - 3 |
| MgO | 0,7 - 1,5 |
| F | 1 - 4 |

wurde in einer mit 3,5 kg mit Schwermahlkugeln beschickten Porzellankugelmühle mit den in Tabelle 1 angegebenen Organopolysiloxanen solange vermahlen, bis der Rückstand des Pulvers auf dem 40 µm Sieb kleiner als 20 % betrug.

Die Zugabe des bzw. der Organopolysiloxan(e)s erfolgte zu Beginn und/oder gegen Ende der Mahlung, wobei die Zugabe gegen Ende dann erfolgte, wenn etwa 50 % des Mahlguts eine mittlere Teilchengröße von weniger als 100 µm hatte. Als -Si-H-gruppenhaltiges Organopolysiloxan wurde ein Methyl-Wasserstoff-Polysiloxan mit einer Viskosität von 15 mPa.s (Millipascalsekunde) und als Organopolysiloxane ohne funktionelle Gruppen wurde ein Methylpolysiloxan mit einer Viskosität von 100 mPa.s eingesetzt.

Der Pulveroberflächenwiderstand der beschichteten Titanweißemailpulver wurde nach 24-stündigem Lagern bei 22° C und einer relativen Luftfeuchtigkeit von 50 % ermittelt.

Von den beschichteten Titanweißemailpulvern wurde jeweils soviel auf gebeizte, vernickelte und entkohlte 0,8 mm dicke Stahlbleche (Beizabtrag 20 g/m², Vernickelung 1 g/m²) auf beiden Seiten pulverelektrostatisch aufgesprüht, daß die Schichtstärke des bei 830°C während 3,5 Minuten eingebrannten Email 150 µm betrug. Der elektrostatische Pulverauftrag erfolgte mit Hilfe einer handelsüblichen Elektrostatikpistole unter Anlegen von 80 kV Spannung an die Koronarelektrode.

Die fertigen Emaillierungen wurden gemäß DIN 51 161 durch ihr Aufschmelzverhalten auf Schaumigkeit überprüft.

Der Vergleich (Tabelle 1) zeigt, daß nur Emailpulver mit der erfindungsgemäßen Beschichtung (Versuch 5, 10 und 13) in allen genannten Beurteilungskriterien optimale Ergebnisse liefern. Emailpulver, die zu Beginn der Mahlung mit dem Methylpolysiloxan versetzt wurden, führen zwar auch zu fehlerfreien Emaillierungen, doch weisen sie einen nicht optimalen Oberflächenwiderstand und eine mangelhafte Lagerstabilität auf, was die technische Verwendung bei Emaillierungen erheblich erschwert.

Werden die genannten Organopolysiloxane als Gemisch zu Beginn oder gegen Ende der Mahlung zugegeben, werden wie bei den Versuchen 1 und 6, die dem Stand der Technik entsprechen, schaumige Emaillierungen erhalten.

**Tabelle 1**

| Versuchs-Nr. | Organopolysiloxan | Menge [Gew.-%] | Zugabezeitpunkt während der Mahlung | Oberflächenwiderstand [Ω] | Lagerstabilität | Beurteilung der Emaillierung |
|---|---|---|---|---|---|---|
| 1 (nach Stand der Technik) | A | 0,3 | zu Beginn | $10^{15}$ | gut | schaumig |
| 2 | B | 0,3 | zu Beginn | $10^{12}$ | unbefriedigend | fehlerfrei |
| 3 | A<br>B | 0,15<br>0,15 | als Gemisch zu Beginn | $10^{14}$ | gut | schaumig |
| 4 | A<br>B | 0,15<br>0,15 | als Gemisch gegen Ende | $10^{13}$ | unbefriedigend | schaumig |
| 5 (erfindungsgemäß) | A<br>B | 0,15<br>0,15 | zu Beginn<br>gegen Ende | $10^{15}$ | gut | fehlerfrei |
| 6 (nach Stand der Technik) | A | 0,4 | zu Beginn | $10^{15}$ | gut | schaumig |
| 7 | B | 0,4 | zu Beginn | $10^{12}$ | unbefriedigend | fehlerfrei |
| 8 | A<br>B | 0,1<br>0,3 | als Gemisch zu Beginn | $10^{14}$ | gut | schaumig |
| 9 | A<br>B | 0,1<br>0,3 | als Gemisch gegen Ende | $10^{13}$ | unbefriedigend | schaumig |

<u>Tabelle 1</u> (Fortsetzung)

| Versuchs-Nr. | Organopolysiloxan | Menge [Gew.-%] | Zugabezeitpunkt während der Mahlung | Oberflächenwiderstand [Ω] | Lagerstabilität | Beurteilung der Emaillierung |
|---|---|---|---|---|---|---|
| 10 (erfindungsgemäß) | A<br>B | 0,1<br>0,3 | zu Beginn<br>gegen Ende | $10^{15}$ | gut | fehlerfrei |
| 11 | A<br>B | 0,2<br>0,2 | als Gemisch<br>zu Beginn | $10^{14}$ | gut | schaumig |
| 12 | A<br>B | 0,2<br>0,2 | als Gemisch<br>gegen Ende | $10^{13}$ | unbefriedigend | schaumig |
| 13 (erfindungsgemäß) | A<br>B | 0,2<br>0,2 | zu Beginn<br>gegen Ende | $10^{15}$ | gut | fehlerfrei |

Organopolysiloxan A bedeutet: Methyl-Wasserstoff-Polysiloxan mit einer Viskosität von 15 mPa.s

Organopolysiloxan B bedeutet: Methylpolysiloxan mit einer Viskosität von 100 mPa.s

## Patentansprüche

1. Mit Organopolysiloxanen beschichtete Emailpulver für den elektrostatischen Pulverauftrag, dadurch gekennzeichnet, daß die Einzelteilchen der Pulver eine innere Schicht eines -Si-H-gruppenhaltigen Organopolysiloxans (A) und eine äußere Schicht eines Organopolysiloxans ohne funktionelle Gruppen (B) aufweisen und der Anteil des Organopolysiloxanes (A) und der Anteil des Organopolysiloxanes (B) jeweils 0,1 bis 0,3 Gew.-%, bezogen auf die Emailpulvermenge, betragen.

2. Emailpulver nach Anspurch 1, dadurch gekennzeichnet, daß der Anteil des Organopolysiloxanes (A) 0,15 bis 0,25 Gew.-% und der Anteil des Organopolysiloxans (B) 0,1 bis 0,2 Gew.-% beträgt.

3. Emailpulver nach Anspruch 1 oder 2, dadurch gekenn zeichnet, daß die innere Schicht aus einem -Si-H-gruppenhaltigen Methylpolysiloxan und die äußere Schicht aus einem Methylpolysiloxan ohne funktionelle Gruppen besteht.

4. Emailpulver nach einem oder mehrerer der Ansprüche 1 bis 3, dadurch gekennzeichnet, daß die beschichteten Emailpulver ein Sieb von 40 µm Maschenweite passieren und der Rückstand des Emailpulvers auf dem Sieb kleiner als 20 % ist.

5. Verfahren zur Herstellung von Emailpulvern nach einem oder mehrerer der Ansprüche 1 bis 4 durch Mahlung von Emailfritten unter Zugabe von Organopolysiloxanen, dadurch gekennzeichnet, daß zu Beginn der Mahlung ein -Si-H-gruppenhaltiges Organopolysiloxan (A) und gegen Ende der Mahlung ein Organopolysiloxan ohne funktionelle Gruppen (B) zugegeben wird und das Organosiloxan (A) und das Organopolysiloxan (B) jeweils in einer Menge von 0,1 bis 0,3 Gew.-%, bezogen auf die Emailpulvermenge, zugegeben werden.

6. Verfahren nach Anspruch 5, dadurch gekennzeichnet, daß das Organopolysiloxan (A) in einer Menge von 0,15 bis 0,25 Gew.-% und das Organopolysiloxan (B) in einer Menge von 0,1 bis 0,2 Gew.-% zugegeben wird.

7. Verfahren nach Anspruch 5 oder 6, dadurch gekennzeichnet, daß das Organopolysiloxan (A) ein -Si-H-gruppenhaltiges Melthylpolysiloxan und das Organopolysiloxan (B) ein Methylpolysiloxan ohne funktionelle Gruppen ist.

8. Verfahren nach einem oder mehreren der Ansprüche 5 bis 7, dadurch gekennzeichnet, daß die Mahlung so ausgeführt wird, daß die beschichteten Emailpulver ein Sieb von 40 µm Maschenweite passieren und der Rückstand des Emailpulvers auf dem Sieb kleiner als 20 % ist.

9. Verwendung der Emailpulver nach einem oder mehrerer der Ansprüche 1 bis 4 und der Emailpulver, die nach einem Verfahren nach einem oder mehrerer der Ansprüche 5 bis 8 erhältlich sind, für den elektrostatischen Pulverauftrag auf metallische Substrate.

## Claims

1. Organopolysiloxane-coated enamel powders for electrostatic powder coating, characterized in that the individual particles of the powder have an inner layer of an organopolysiloxane containing -Si-H-groups (A) and an outer layer of an organopolysiloxane without any functional groups (B) and in that the proportion of organopolysiloxane (A) and the proportion of organopolysiloxane (B) is from 0.1 to 0.3% by weight in either case, based on the quantity of enamel powder.

2. Enamel powders as claimed in Claim 1, characterized in that the proportion of organopolysiloxane (A) is from 0.15 to 0.25% by weight and the proportion of organopolysiloxane (B) from 0.1 to 0.2% by weight.

3. Enamel powders as claimed in Claim 1 or 2, characterized in that the inner layer consists of a methyl polysiloxane containing -Si-H-groups and the outer layer of a methyl polysiloxane without any functional groups.

4. Enamel powders as claimed in one or more of Claims 1 to 3, characterized in that the coated enamel powders pass through a 40 µm mesh sieve and the residue of the enamel powder on the sieve is less than 20%.

5. A process for the production of the enamel powders claimed in one or more of Claims 1 to 4 by grinding enamel frits in the presence of organopolysiloxanes, characterized in that an organopolysiloxane containing -Si-H-groups (A) is added at the beginning of grinding while an organopolysiloxane without any functional groups (B) is added towards the end of grinding, the organopolysiloxane (A) and the organopolysiloxane (B) each being added in a quantity of from 0.1 to 0.3% by weight, based on the quantity of enamel powder.

6. A process as claimed in Claim 5, characterized in that the organopolysiloxane (A) is added in a quantity of from 0.15 to 0.25% by weight and the organopolysiloxane (B) in a quantity of from 0.1 to 0.2% by weight.

7. A process as claimed in Claim 5 or 6, characterized in that the organopolysiloxane (A) is a methyl polysiloxane containing -Si-H-groups while the organopolysiloxane (B) is a methyl polysiloxane without any functional groups.

8. A process as claimed in one or more of Claims 5 to 7, characterized in that grinding is carried out in such a way that the coated enamel powders pass through a 40 µm mesh sieve and the residue of the

enamel powder on the sieve is less than 20%.

9. The use of the enamel powders claimed in one or more of Claims 1 to 4 and of the enamel powders obtainable by the process claimed in one or more of Claims 5 to 8 for the electrostatic powder coating of metallic substrates.

**Revendications**

1. Poudres d'émail revêtues d'organopolysiloxanes pour le poudrage électrostatique, caractérisées en ce que les particules individuelles de la poudre d'émail présentent une couche interne constituée d'un organopolysiloxane renfermant des groupements -Si-H (A) et une couche externe se composant d'un organopolysiloxane sans groupements fonctionnels (B) et en ce que l'organopolysiloxane (A) et l'organopolysiloxane (B) sont présents chacun dans une proportion de 0,1 à 0,3% en poids par rapport à la quantité de poudre d'émail.

2. Poudres d'émail selon la revendication 1, caractérisées en ce que la proportion de l'organopolysiloxane (A) se situe dans l'intervalle de 0,15 à 0,25% en poids, tandis que la proportion de l'organopolysiloxane (B) se situe dans l'intervalle de 0,1 à 0,2% en poids.

3. Poudres d'émail selon la revendication 1 ou 2, caractérisées en ce que la couche interne est constituée d'un méthylpolysiloxane renfermant des groupements -Si-H et en ce que la couche externe se compose d'un méthylpolysiloxane sans groupements fonctionnels.

4. Poudres d'émail selon une ou plusieurs des revendications 1 à 3, caractérisées en ce que les poudres d'émail revêtues passent au travers d'un crible de 40 µm d'ouverture et en ce que le refus de crible est inférieur à 20%.

5. Procédé de fabrication de poudres d'émail selon une ou plusieurs des revendications 1 à 4, par mouture de frittes d'émail sous adjonction d'organopolysiloxanes, caractérisé en ce que l'on ajoute au début de la mouture un organopolysiloxane renfermant des groupements -Si-H (A) et à la fin de la mouture, un organopolysiloxane sans groupements fonctionnels (B), et en ce que l'organopolysiloxane (A) et l'organopolysiloxane (B) sont ajoutés chacun dans une proportion de 0,1 à 0,3% par rapport à la quantité de poudre d'émail.

6. Procédé selon la revendication 5, caractérisé en ce que l'organopolysiloxane (A) est ajouté dans une proportion de 0,15 à 0,25% en poids et en ce que l'organopolysiloxane (B) est additionné dans une proportion de 0,1 à 0,2% en poids.

7. Procédé selon la revendication 5 ou 6, caractérisé en ce que l'organopolysiloxane (A) est un méthylpolysiloxane renfermant des groupements -Si-H et en ce que l'organopolysiloxane (B) est un méthylpolysiloxane sans groupements fonctionnels.

8. Procédé selon une ou plusieurs des revendications 5 à 7, caractérisé en ce que la mouture est effectuée de manière telle que les poudres d'émail revêtues passent au travers d'un crible de 40 µm d'ouverture et en ce que le refus de crible est inférieur à 20%

9. Mise en œuvre des poudres d'émail selon une ou plusieurs des revendications 1 à 4 et des poudres d'émail obtenues par un procédé selon une ou plusieurs des revendications 5 à 8, pour le poudrage électrostatique de substrats métalliques.

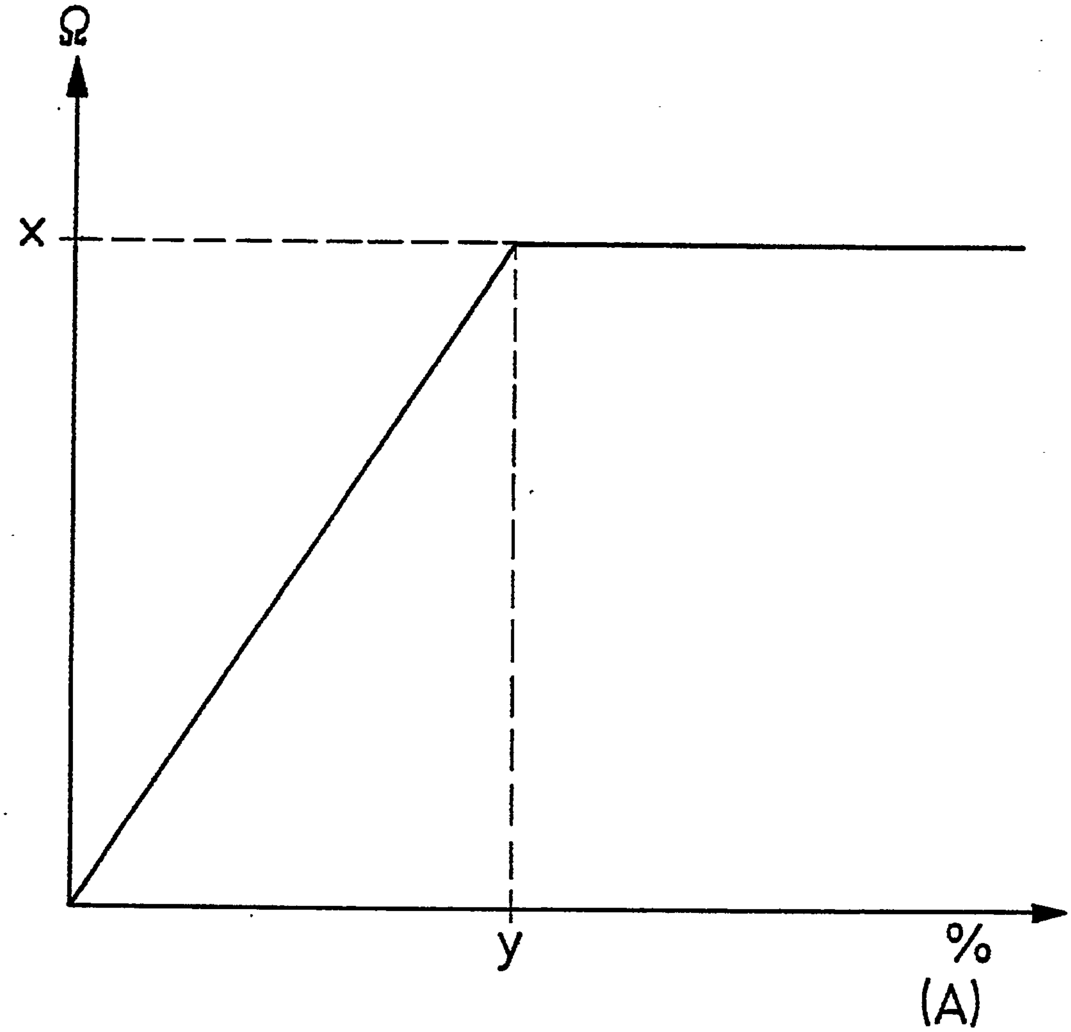


FIG.1